Europäisches Patentamt

(19) European Patent Office

Office européen des brevets

(11) Publication number: **0 017 362**

**A1**

(12) **EUROPEAN PATENT APPLICATION**

(21) Application number: 80300780.6

(22) Date of filing: 13.03.80

(51) Int. Cl.³: **B 29 D 11/00**
**B 60 R 1/02**

(30) Priority: 13.03.79 GB 7908807

(43) Date of publication of application:
15.10.80 Bulletin 80/21

(84) Designated Contracting States:
AT BE CH DE FR IT LU NL SE

(71) Applicant: Leach, Roger John
25 The Precinct
Hust Park West Molesey, Surrey(GB)

(72) Inventor: Leach, Roger John
25 The Precinct
Hust Park West Molesey, Surrey(GB)

(74) Representative: Cropp, John Anthony David et al,
MATHYS & SQUIRE 10 Fleet Street
London, EC4Y 1AY(GB)

(54) Method for producing lightweight articles with curved reflecting surfaces.

(57) Lightweight articles with curved reflecting surfaces and especially suitable for use as rear view mirrors for motor vehicles are obtained by a method comprising

(i) providing a flexible laminate 32 comprising a transparent plastics sheet and a layer of reflecting material bonded to one face thereof,

(ii) drawing a zone of said laminate into a curved profile by the application of differential fluid pressure across it, in known manner.

(iii) while maintaining said zone in said drawn curved profile by application of differential fluid pressure, applying to the face of the curved zone of laminate opposite the face comprising the transparent plastics sheet coating of a liquid composition which cures to a tough resin and causing or allowing the composition to set to form a tough resinous layer 54 bonded to and supporting said drawn zone, and

(iv) introducing into an enclosed mould a wall of which is provided by said resinous layer a material which reacts to form a rigid plastics foam and causing or allowing said material to foam to fill the mould and set and thereby become bonded as a moulded rigid foamed plastics backing 58 to the resinous layer.

FIG. 4

This invention relates to a method for producing lightweight articles having curved reflecting surfaces, and is especially but not exclusively directed to producing lightweight mirrors having a curved reflecting surface.

It has been proposed to produce a lightweight mirror having a curved mirror surface by forming an enclosed circular or spherical envelope of metallised plastics film, inflating it to the desired contour and then applying to the outside of the inflated envelope a liquid formulation which will foam and set to yield a rigid plastics foam which in effect rigidifies the inflated envelope. The required mirror is then cut from the product.

This method of production, however, has many disadvantages.

Firstly, for large mirrors it may be necessary in order to obtain a sphere of appropriate size to join together two or more sheets of metallised plastics to form the envelope and as the joints will appear as irregularities or distortions in the reflecting surface of the finished product, any sections cut from the sphere to provide mirrors must avoid these joints and thus much of the surface of the sphere is unusable. Even where a single sheet is used, it must be bonded to itself to form the enclosed envelope and the bonds will produce such irregularities and distortions.

Secondly, the free foaming of the liquid formulation results in an uneven foamed plastics coating which requires secondary treatment to produce an acceptable product.

Thirdly, the process is unsuitable for the production of convex mirror surfaces.

- 3 -

The present invention provides a method of producing curved lightweight mirrors which avoids these disadvantages.

According to the present invention, the method comprises the steps of

(i) providing a flexible laminate comprising a transparent plastics sheet and a layer of reflecting material bonded to one face thereof,

(ii) drawing a zone of said laminate into a curved profile by the application of differential fluid pressure, most preferably differential gas pressure, across it in known manner,

(iii) while maintaining said zone in said drawn curved profile by application of differential fluid pressure, applying to the face of the curved zone of laminate opposite the face comprising the transparent plastics sheet a coating of a liquid composition which cures to a tough resin and causing or allowing the composition to set to form a tough resinous layer bonded to and supporting said drawn zone, and

(iv) introducing into an enclosed mould a wall of which is provided by said resinous layer a material which reacts to form a rigid plastics foam and causing or allowing said material to foam to fill the mould and set and thereby become bonded as a moulded rigid foamed plastics backing to the resinous layer.

The step of drawing the zone of the sheet into a curved profile may be effected by known procedures. For example, a central zone of the laminate is restrained by an annular clamp and then either
a vacuum or a superatmospheric pressure is applied to one face of the
restrained zone. It will be seen that by
choice of the use of vacuum or superatmospheric pressure, convex or
concave reflecting surfaces may be produced, as desired, although the
invention is especially convenient for the production of convex surfaces.

For simplicity, the drawing step is preferably conducted without
the aid of heat and the plastics sheet is chosen to be such that the flexible
laminate is cold-drawable.

Suitably, the laminate will comprise a sheet of metallised, e.g.
aluminised, thermoplastics material, preferably thermoplastics polyester,
e.g. Mylar (Registered Trade Mark) or Melinex (Registered Trade Mark).
Such metallised plastics sheet seems to tolerate a generally adequate
degree of cold drawing without damage to the reflective surface. However,
the degree of cold drawing that can be tolerated will vary according to
the nature of the laminate and with the use of the heavier gauges of plastics
sheets in the laminate it may be desirable to warm the laminate to assist
drawing.

The reflecting layer will normally be of aluminium or silver and
may conveniently be formed on the sheet or film by vacuum deposition, by
chemical deposition or by spraying from a solution..In each case, the layer
becomes bonded to the sheet or film. Methods of providing the reflecting
layer are well known.

If desired, the reflecting layer may be sandwiched between two
layers of plastics, one or both of which may be transparent.

The provision of the resinous layer achieves several objectives.
Firstly, it avoids the distortion of the reflective surface that has been
observed when a plastics foam is cast directly against the mirror surface, which
distortion is believed to be due to expansion and contraction of the gases in
the cells of the foam formed immediately adjacent the reflective surface under changing temperature conditions. Secondly it permits the use of low density foams which in the absence of said resinous layer would produce articles which are highly sensitive to damage by even quite low impact forces. Thirdly, it will reduce any adverse effect on the drawn laminate of the heat generated during foaming where the foaming involves a strongly exothermic reaction. Fourthly, it can reduce or prevent undesirable distortion of the curved surface of the laminate due to the pressure generated during the formation of the rigid plastics foam backing. Very good results are obtained where the resin is a tough elastomer, e.g. having a hardness similar to that exhibited by the product of curing "Castomer SU 752" marketed by Baxenden Chemicals of Accrington, England; that is a Shore hardness of about D80-90.

An additional or alternative method of reducing or avoiding such distortion comprises applying a superatmospheric fluid pressure to the face of the transparent plastics sheet to counter any pressure exerted on the other face of the laminate by the foaming.

The liquid composition employed to provide the tough resinous layer is preferably curable without the application of heat, and is most preferably a cold-curable polyurethane elastomer composition. Preferably any occluded air in the liquid composition is first removed e.g. by holding the liquid under vacuum.

The preferred plastics foam for the rigid foamed plastics backing is polyurethane foam. Strong rigid structures can be obtained from polyurethane foams and the production of such foams in a mould is simple and can be achieved without the need for complicated and expensive equipment. Foamed polyurethanes can be made without difficulty by mixing together commercially available liquid chemicals in the atmosphere and at room temperature in known manner, and the density of the foam may be controlled in known manner. Other plastics foams such as phenolic foams may be used, however.

It is preferred to use a self-skinning foam-forming material.

In most cases, all the required rigidity for the article may be provided by the rigid plastics foam backing. However, in some circumstances, e.g. as in the case of articles having a particularly large reflecting area, it may be found advantageous for the rigid foam plastics backing to be laminated to a further backing material to further increase rigidity although this will generally result in some loss of the weight advantage gained by using the foam as the sole backing.

Alternatively or additionally, the rigid foam plastics backing may include reinforcement such as glass fibre to improve the structural strength thereof.

The foam plastics backing is formed in situ against the resin layer while the latter forms a wall of a closed mould by injecting a liquid plastics-foam-forming composition into the mould and then causing or allowing the composition to foam to fill the mould and set.

Where the foam-forming plastics material yields a polyurethane foam, the foam is generally self-bonding to the elastomeric layer but adhesion can be provided or improved, if desired, by the application of an adhesive to the resin layer. Where the foam-forming reaction is exothermic, a coating, such as of a paint provided by Swift Chemicals of Charlton, England, may be applied which is heat-softened by the foam-forming reaction and becomes tacky.

By forming the rigid foam plastics backing against the resin      layer in a mould, it is possible to produce a finished article by the method of the invention without the need for any separate shaping step.

In one suitable embodiment of the invention, the laminate is clamped about its periphery within a closed vessel so as to form, in effect, a diaphragm spanning the interior of the vessel to define a space on each side of it.  To one side of the laminate the vessel is provided with means for increasing and/or reducing the pressure in that space.  .To the other side of the laminate, the vessel is provided with means permitting the introduction of the liquid composition and the plastics-foam-forming material.  The laminate is located with the transparent plastics sheet which is to form the external face of the eventual product facing into the first-mentioned space.  A reduction in pressure on that face in step (ii) will thus result in the production of a convex curved reflecting surface whereas an increase in the pressure on that face will produce a concave curved reflecting surface.

Where a concave surface is required, the initial cold drawing and the subsequent optional counterpressure during the foaming step will both require pressurisation of the first-

mentioned space. Where a convex surface is required, however, the initial cold drawing will require evacuation of the first mentioned space and it will be necessary to provide connections both to vacuum and to a pressure source if it is desired to apply a counter-pressure during the step of forming the rigid plastics foam.

Complex curved shapes may be obtained by local variation of the pressure over the face of the laminate. For example, a generally convex surface with a flattened portion may be obtained by reducing the level of vacuum applied over that portion relative to remaining area. Conversely, a secondary convex surface of smaller diameter may be applied by increasing the level of vacuum applied over the desired area relative to the remaining area.

In one preferred embodiment, the liquid composition in step (iii) is applied prior to step (iv) to the remaining mould wall surfaces of the mould referred to in step (iv), except of course for a gap for injecting the plastics-foam-forming material, whereby in the product formed from the process, the foam backing is in effect encased in a housing of elastomer.

One particular application of the mirrors obtainable by the method of this invention is as rear view mirrors for motor vehicles, especially goods vehicles.

The invention is now described in more detail with particular reference to preferred embodiments thereof and with the aid of the accompanying drawings in which

Figures 1 to 4 illustrate the steps of forming a convex curved mirror by the method of the invention

Figure 5 shows a cross-section through the mirror so obtained, and

Figure 6 shows a modification of the cold drawing step of Figure 1 to produce a complex curvature mirror.

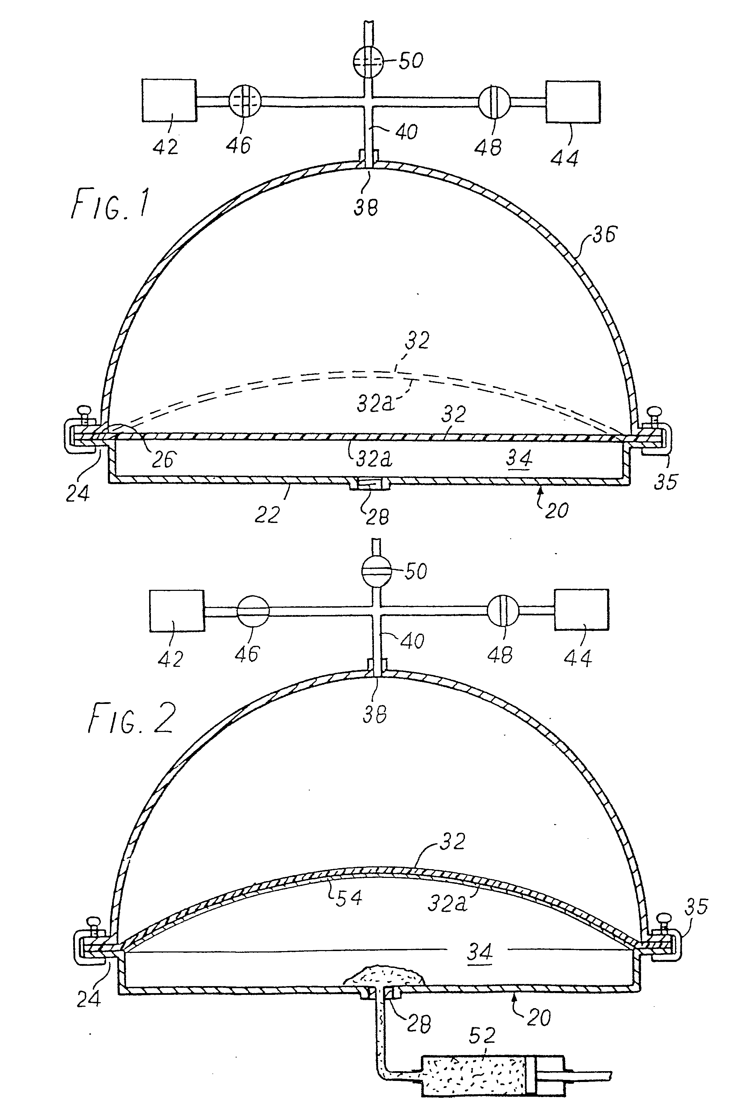

Referring to Figure 1, 20 represents a mould comprising a circular rigid metal plate 22 having a raised periphery 24 provided with a flat face 26. The plate is provided with a port 28 which can be plugged or to which a feedpipe can be attached for the supply of liquids from sources not shown. The surfaces of the mould are coated with a suitable mould release agent.

A circular disc 32 cut from metallised Melinex (Registered Trade Mark) film is placed over the face 26 of the raised periphery to form a cavity 34 with the metallised face 32a of the disc facing into the cavity. A hemispherical cover 36 is placed on top of the disc 32 as shown and the assembly is clamped together, e.g. by clamps 35, to obtain an air-tight seal between the face of the cover and the disc 32. Cover 36 is provided with a port 38 which opens into pipeline 40 which can be attached to a vacuum source 42, to a compressed air supply 44 or to atmosphere by means of valves 46, 48 and 50, respectively.

In the next step of the process, port 28 is open to the atmosphere and the pipeline 40 is connected to the vacuum source 42 (valves 46 and 50 changed to the positions shown in broken outline) thereby creating a vacuum within the cover 36 and a differential pressure across disc 32 which is thereby cold drawn into the convex shape shown in broken outline.

With the vacuum maintained (Figure 2) so as to maintain the cold-drawn laminate in the drawn convex shape, a measured amount of a liquid composition 52 which sets to a tough elastomeric resin is injected through port 28 to provide a coating of sufficient thickness on the disc so as to provide temporary support for the disc in its cold drawn state and the apparatus is inverted and oscillated or rotated by means not shown to obtain a uniform coating 54 of the composition over the metallised face 32a of the cold-drawn disc. Any excess composition is then drained out and the coating caused or allowed to set, heat being applied if desired or necessary, e.g. by placing the apparatus in an oven. Preferably, however, the composition 52 is a cold-curable composition, most preferably a cold-curable polyurethane elastomer composition such as "Castomer SU 752" marketed by Baxenden Chemicals of England.

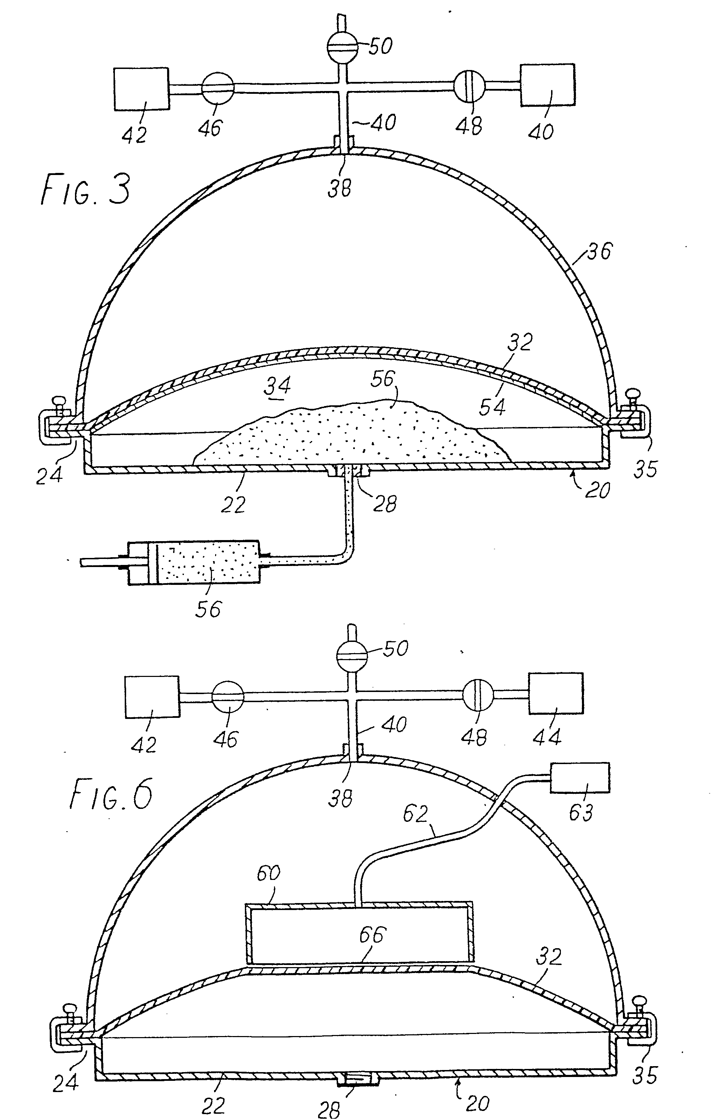

When the elastomer has set, the vacuum may be released but it is generally preferred to maintain it at least for the commencement of the next step of the process (Figure 3) in which a measured quantity of a foamable composition 56 which reacts to form a rigid plastics foam is injected through port 28. Port 28 is then closed by the plug 28a and the composition is caused or allowed to foam to fill the mould and set to rigid plastics foam shown as 58 in Figure 7. Preferably the composition is chosen to react in the cold, e.g. a cold-curing polyurethane foam composition such as those sold under the name "Isofoam" by Baxenden Chemicals, e.g. Isofoam 400, SS 200, SS 210, SS 212 or RM 114.

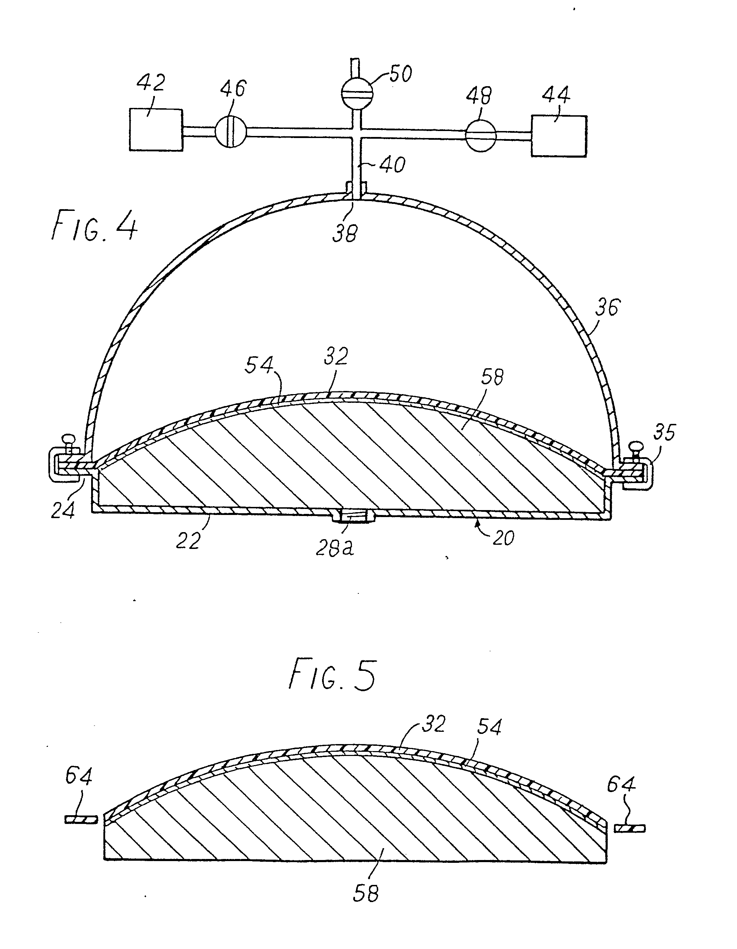

During at least the latter part of the foaming reaction the vacuum may be released and, as illustrated in Figure 4, the space under cover 36 may, if desired, be pressurised in a controlled manner by supplying compressed air from supply 44 through valve 48, to counter the pressure exerted on disc 32 by the expansion of the foam and ensure that no distortion of the convex curvature of disc 32 occurs.

After completion of foaming and setting of the composition 56, the compressed air supplies (if used) are shut off and the space under cover 36 vented to atmosphere, the cover removed and the mirror illustrated in Figure 5 comprising the convex-curved disc 32 bonded to the backing of rigid plastics foam 58 with an intermediate elastomer layer 54 removed from the mould.

The flat peripheral portion 64 of the mirror may be removed, e.g. by sawing or cutting.

If desired, the process may be modified to produce a complex curved surface by varying the level of vacuum applied over the surface of the laminate during the cold drawing step. For example, and with reference to Figure 5, one or more hoods 60 (one only is shown in Figure 6) may be located at appropriate points within the cover 36 by means not shown, each connected by means of a pipeline 62 to a
source 63 which is such as to maintain under hood 60 an absolute
pressure higher than that of the vacuum source 42. With this
arrangement, a product can be obtained which is generally convex in
shape but with a centrally located flattened face 64.

While the method illustrated in the drawings produces a
convex mirror, it will be recognised that a concave mirror may be
produced by applying a superatmospheric pressure through port 38
to cold draw the laminate.

By means of the method of the invention, curved mirrors
may be produced without the reflecting surface of the mirror being
touched during manufacture. By means of the process, therefore,
lightweight mirrors can be obtained in a simple manner employing
uncomplicated equipment and relatively cheap materials and having
an excellent mirror surface.

Mirrors can be produced in accordance with this invention
at weights of as little as 3-4kg/sq. meter of reflective surface area.

CLAIMS

1.    A method of producing lightweight mirrors characterised in that it comprises

(i)  providing a flexible laminate comprising a transparent plastics sheet and a layer of reflecting material bonded to one face thereof,

(ii)  drawing a zone of said laminate into a curved profile by the application of differential fluid pressure across it, in known manner,

(iii)  while maintaining said zone in said drawn curved profile by application of differential fluid pressure, applying to the face of the curved zone of laminate opposite the face comprising the transparent plastics sheet a coating of a liquid composition which cures to a tough resin    and causing or allowing the composition to set to form a resinous    layer bonded to and supporting said drawn zone, and

(iv)  introducing into an enclosed mould a wall of which is provided by said resinous    layer a material which reacts to form a rigid plastics foam and causing or allowing said material to foam to fill the mould and set and thereby become bonded as a moulded rigid foamed plastics backing to the    resinous    layer.

2.    A method as claimed in Claim 1 characterised in that the laminate comprises a cold-drawable metallised thermoplastics polyester sheet.

3.    A method as claimed in Claim 1 or Claim 2 characterised in that the liquid composition provides on curing a tough elastomeric resin.

- 14 -

4.     A method as claimed in Claim 3 characterised in that the resin    has a Shore hardness of D80 to D90.

5.     A method as claimed in any one of Claims 1 to 4 characterised in that the rigid plastics foam is a polyurethane foam.

6.     A method as claimed in Claim 5 characterised in that the material employed in step (iv) is a self-skinning foam-forming composition.

7.     A method as claimed in any one of Claims 1 to 6 characterised in that in step (iv) a superatmospheric fluid pressure is applied to the face of the transparent plastics sheet to counter pressure exerted on the other face of the laminate by the foaming of said material to reduce or prevent distortion of the laminate.

8.     A method as claimed in any one claims 1 to 7 characterised in that the liquid composition applied in step (iii) is applied prior to step (iv) to the remaining mould surfaces of the mould referred to in step (iv).

9.     A lightweight mirror characterised in that it has been obtained by the method claimed in any one of Claims 1 to 9.

10.    A rear view mirror for a motor vehicle characterised in that the mirror portion is obtained by the method claimed in any one of Claims 1 to 9.

FIG. 1

FIG. 2

*FIG. 3*

*FIG. 6*

FIG. 4

FIG. 5

0017362

Application number

European Patent Office

**EUROPEAN SEARCH REPORT**

EP 80 30 0780

## DOCUMENTS CONSIDERED TO BE RELEVANT

| Category | Citation of document with indication, where appropriate, of relevant passages | Relevant to claim |
|---|---|---|
| | GB - A - 995 694 (COMPUTING DEVICES OF CANADA)<br>* Pages 2-6; figures 1-6 * | 1,2,7,9 |
| | FR - A - 1 214 783 (BAXTER)<br>* Page 1, right-hand column; pages 2,3 * | 1,2,9 |
| | GB - A - 1 275 555 (I.C.I.)<br>* Pages 1,2; page 3, left-hand column; page 6, example 3; claims * | 1,3,5,9 |
| | FR - A - 2 386 828 (OLYMPUS OPTICAL COMP. LTD.)<br>* Page 2, lines 15-37; page 3, lines 1-21 * | 1 |
| A | US - A - 3 840 417 (GENERAL ELECTRIC) | |
| A | DE - A - 1 780 086 (UNION GLAS GmbH) | |

**CLASSIFICATION OF THE APPLICATION (Int. Cl. 3)**

B 29 D 11/00
B 60 R 1/02

**TECHNICAL FIELDS SEARCHED (Int.Cl. 3)**

B 29 D 11/00
G 02 B 5/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search | Date of completion of the search | Examiner |
| The Hague | 26-06-1980 | VAN THIELEN |

EPO Form 1503.1 06.78